# FASCICULE DE BREVET EUROPEEN

(11) **EP 1 920 281 B1**
(45) Date de publication et mention de la délivrance du brevet: **25.03.2009**
(21) Numéro de dépôt: 06793061.0
(22) Date de dépôt: 29.08.2006
(51) Int. Cl.: G02B 6/42

(54) **DISPOSITIF DE COUPLAGE HERMETIQUE**
HERMETISCH KOPPELNDE EINRICHTUNG
HERMETICALLY COUPLING DEVICE

(30) Priorité: 02.09.2005 FR 0552666
(43) Date de publication de la demande: 14.05.2008
(73) Titulaire: COMMISSARIAT A L'ENERGIE ATOMIQUE, 75015 Paris (FR); INTEXYS, 31312 Labege (FR)
(72) Inventeur: KOPP, Christophe, F-38120 Fontanil-Cornillon (FR); BERNABE, Stéphane, F-38500 Voiron (FR)
(74) Mandataire: Poulin, Gérard
(86) Numéro de dépôt international: PCT/EP2006/065780
(87) Numéro de publication internationale: WO 2007/025969

(56) Documents cités:
- EP-A- 0 975 072
- WO-A-03/058781
- US-A- 4 836 633
- US-A1- 2004 033 029

## Description

### DOMAINE TECHNIQUE

La présente invention concerne le domaine des télécommunications, et plus particulièrement celui des composants situés aux interfaces optique/électrique des réseaux de télécommunication, tel qu'un dispositif de couplage hermétique, un dispositif et un système émetteur et/ou récepteur optoélectronique, ainsi qu'un procédé pour leur fabrication. Ces dispositifs conviennent particulièrement au couplage entre un moyen de transmission optique et un, ou plusieurs, composants optoélectroniques émetteur et/ou récepteur.

### ÉTAT DE LA TECHNIQUE ANTÉRIEURE

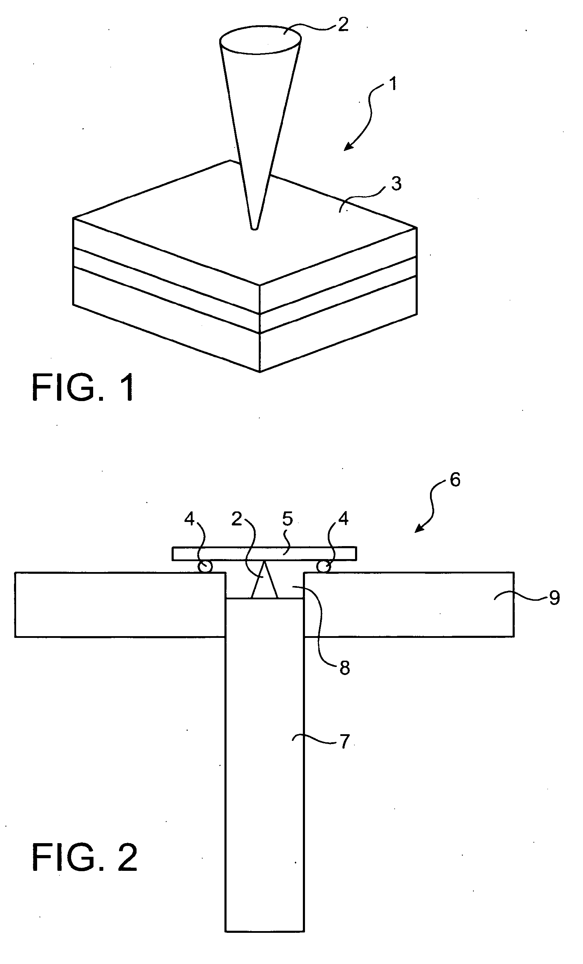

Dans un réseau optique, des composants se situant aux interfaces optique/électrique, couramment appelés « transceiver », jouent le rôle d'émetteur et/ou de récepteur, et effectuent la conversion des signaux optiques en signaux électriques, et inversement. Le moyen de transmission optique généralement utilisé avec un transceiver est une fibre optique. Le composant récepteur utilisé dans un transceiver est généralement un photodétecteur de type photodiode. Le composant émetteur utilisé dans un transceiver est généralement de l'un des deux types suivants : laser à émission par la tranche (ou EEL pour Edge Emitting Laser) ou laser à émission par la surface à cavité verticale (ou VCSEL pour Vertical Cavity Surface Emitting Laser). La figure 1 représente un VCSEL 1 qui émet un faisceau laser 2 par une face 3.

Un EEL émet un faisceau de forme sensiblement elliptique, particulièrement inadapté à un couplage élevé avec une fibre optique. Les solutions envisagées pour améliorer ce couplage, telles qu'une adaptation de mode au niveau d'un guide optique ou par l'intermédiaire de l'utilisation d'un système optique de couplage, complexifient l'architecture et rendent délicate l'étape d'alignement nécessaire entre l'EEL et la fibre optique en augmentant la sensibilité du dispositif aux erreurs de positionnement.

Dans un transceiver, un VCSEL et/ou une photodiode sont généralement hybridés sur une plate-forme comprenant typiquement un réseau d'interconnexions électriques. On entend par « hybridé », ici et dans tout le reste de ce document, une connexion à la fois mécanique et électrique. Cette plate-forme peut, par exemple, être réalisée en silicium, céramique ou en circuit imprimé. La solution de couplage entre une fibre optique et un composant optoélectronique consiste généralement à percer la plate-forme afin d'approcher la fibre optique vers le composant optoélectronique, et à centrer passivement, c'est-à-dire à centrer mécaniquement, sans l'intervention d'un faisceau laser émis ou reçu par le composant, l'axe optique de la fibre avec l'axe optique du composant optoélectronique.

La demande de brevet US 2003/0098511 propose un dispositif de couplage 6, représenté sur la figure 2, où une fibre optique 7 est insérée dans un trou 8, de diamètre légèrement plus grand que celui de la fibre optique 7, traversant totalement une plate-forme 9. Un composant optoélectronique 5, ici un VCSEL émettant un faisceau laser 2 dans la fibre optique 7, est hybridé et centré avec précision sur la plate-forme 9, au-dessus du trou 8, en utilisant les techniques d'hybridation avec des microbilles 4 d'alliages fusibles. Cette technique d'hybridation par microbilles, couramment appelée « flip-chip » (ou puce retournée), permet d'obtenir un alignement du composant 5 avec la fibre optique 7 dont la précision est de l'ordre du micromètre.

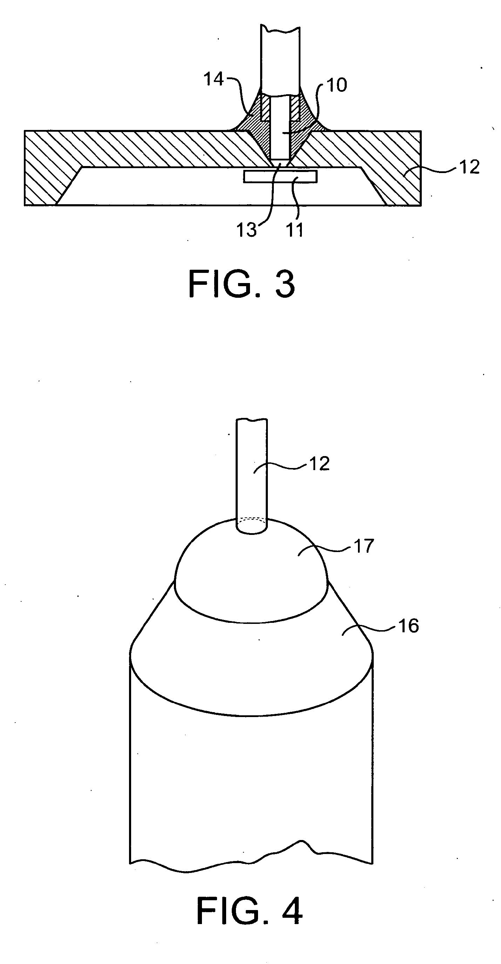

Le brevet US 4 826 272 présente l'assemblage d'une fibre optique 10 perpendiculairement à un composant optoélectronique 11 fixé sur un support 12. Cet assemblage est représenté sur la figure 3. Une extrémité de la fibre optique 10 est en butée dans un trou à profil en V 13 (appelé « V-groove »), débouchant à section carrée. Ce trou 13 permet de centrer passivement la fibre 10 et de déterminer la distance entre l'extrémité de la fibre 10 et le composant 11. Cette technique permet d'obtenir une bonne précision de couplage, typiquement inférieure à 2 micromètres.

De manière générale, les composants présents sur un transceiver doivent supporter des conditions de fonctionnement environnementales difficiles pendant des durées d'au moins 20 ans, ce qui implique l'utilisation de solutions pour isoler ces composants, généralement présents sous la forme de puces nues, des agressions environnementales (température, humidité, etc.). Ces contraintes sont définies dans diverses normes ou standards, tel que les documents « Telcordia GR-468-CORE » ou « MIL-STD-883 ».

La principale méthode de protection consiste à utiliser un capot hermétique recouvrant ces composants. Ce capot hermétique permet de protéger en partie les composants de l'environnement extérieur. En effet, afin de compléter cette protection et garantir une herméticité totale autour de ces composants, on rend hermétique un passage, dans la plate-forme, par lequel la fibre optique est introduite, c'est-à-dire le trou 8 sur la figure 2 et le trou 13 sur la figure 3.

Sur la figure 3, on voit que la fibre optique 10 est fixée dans le trou 13 par des moyens de collage 14, ici de la colle organique. Cette colle, qui remplit tout à fait son rôle de fixation de la fibre 10, ne permet pas de rendre hermétique le trou 13. En effet, ces colles organiques présentent des taux de perméabilité à la vapeur d'eau bien trop grands.

Il existe plusieurs méthodes pour rendre hermétique un passage dans lequel une fibre optique est introduite.

Tout d'abord, la fibre peut être métallisée, puis brasée dans un trou prévu dans la plate-forme. Mais la métallisation d'une fibre optique coûte cher et peut fragiliser cette fibre, notamment à cause des contraintes mécaniques qu'elle subit durant le refroidissement du dépôt métallique. L'étape de brasage peut également contraindre et fragiliser la fibre à cause de la montée en température nécessaire au brasage, typiquement à plus de 200°C. Enfin, l'étape de brasage peut également fragiliser le joint de brasure formé à cause des contraintes mécaniques subies lors de son refroidissement.

Du verre fusible peut également être utilisé pour rendre hermétique un trou dans lequel est introduite une fibre, comme cela est représenté sur la figure 4. Sur cette figure, une fibre optique 15 est introduite dans une ferrule 16, l'herméticité entre la fibre 15 et la ferrule 16 étant réalisée avec du verre fusible 17. Mais là encore, l'utilisation du verre 17 peut contraindre et fragiliser la fibre 15 à cause de la montée en température nécessaire durant une refonte de ce verre fusible 17, typiquement à plus de 300°C.

Enfin, une fibre optique peut être sertie en force dans un trou destiné à l'accueillir. Dans cette troisième méthode, une bague de sertissage est placée sur la jonction fibre - trou. Mais le sertissage en force, à cause de l'adaptation des coefficients de dilatation thermique entre la fibre, la bague de sertissage, et le trou, peut contraindre et fragiliser la fibre.

Outre les aspects mécaniques, les problèmes de contrainte au niveau de la fibre optique peuvent également être optiquement préjudiciables dans le cas, par exemple, d'une fibre optique à maintien de polarisation. Dans ce cas, toute contrainte dégrade les performances de maintien de polarisation en augmentant le couplage entre les états de polarisation.

De plus, les températures élevées appliquées pour fixer la fibre optique peuvent ne pas être tolérées par les composants optoélectroniques ou électroniques présents sur la plate-forme.

### EXPOSÉ DE L'INVENTION

La présente invention a pour but de proposer un dispositif de couplage hermétique utilisant les techniques d'alignement passif de l'art antérieur entre un moyen de transmission optique et un ou plusieurs composants optoélectroniques. Le dispositif de la présente invention permet, de manière peu coûteuse, de garantir l'herméticité d'un trou guidant pour le moyen de transmission optique tout en évitant les contraintes mécaniques et thermiques, subies par le moyen de transmission optique, rencontrées avec les dispositifs de la technique antérieure.

Pour atteindre ces buts, la présente invention propose un dispositif de couplage hermétique entre au moins un composant optoélectronique, devant émettre et/ou recevoir au moins un faisceau lumineux, et un moyen de transmission optique devant véhiculer le faisceau lumineux tel que défini dans la revendication 1. Le dispositif de couplage hermétique comporte un substrat muni d'au moins un trou borgne, ayant une paroi de fond, dans lequel une partie du moyen de transmission optique doit être introduite, le faisceau lumineux devant traverser le substrat en passant à travers la paroi de fond du trou borgne, et le substrat devant accueillir le composant optoélectronique sensiblement à l'opposé du trou borgne.

Ainsi, au lieu d'utiliser une des méthodes de la technique antérieure pour rendre hermétique le passage du moyen de transmission optique dans un dispositif de couplage non hermétique, on réalise un dispositif de couplage permettant un alignement passif du composant optoélectronique avec le moyen de transmission optique, et qui garantit également l'herméticité du passage entre le composant optoélectronique et le moyen de transmission optique.

Ce dispositif permet également au moyen de transmission optique de s'affranchir des contraintes mécaniques et thermiques subies dans les méthodes de la technique antérieure.

Le substrat peut être en un matériau à base de semi-conducteur, tel que du silicium.

Le dispositif de couplage hermétique peut comporter un système de photodétection intégré sur une surface en semi-conducteur du substrat, disposé sensiblement à l'opposé du trou borgne.

Le système de photodétection peut, par exemple, être au moins un photodétecteur de type MSM.

Le substrat est formé d'un empilement d'au moins une première couche et d'au moins une seconde couche destinée à être disposée entre la première couche et le composant optoélectronique, la première couche étant totalement traversée par le trou borgne du substrat, et la seconde couche formant la paroi de fond du trou borgne du substrat.

La seconde couche peut être partiellement traversée par le trou borgne.

On peut envisager que la seconde couche soit en un matériau à base de semi-conducteur, tel que du silicium, ou à base de verre ou de silice.

La seconde couche peut être formée d'un empilement d'au moins deux sous-couches.

Le dispositif de couplage hermétique comporte des motifs réfléchissants insérés entre les deux couches du dispositif de couplage hermétique, disposés sensiblement en périphérie du trou borgne, et destinés à refléter une partie du faisceau lumineux émis par le composant optoélectronique.

Le dispositif de couplage hermétique peut comporter au moins une troisième couche totalement traversée par au moins un trou sensiblement centré par rapport au trou borgne, la seconde couche étant disposée entre la première couche et la troisième couche.

La troisième couche peut être en un matériau à base de semi-conducteur, tel que du silicium.

La présente invention concerne également un dispositif émetteur et/ou récepteur optoélectronique comportant au moins un composant optoélectronique émetteur et/ou récepteur, et un dispositif de couplage hermétique ainsi caractérisé, le composant optoélectronique étant solidaire du dispositif de couplage hermétique et disposé sensiblement à l'opposé du trou borgne du dispositif de couplage hermétique.

Le composant optoélectronique peut être un émetteur laser, tel un VCSEL, ou un photodétecteur, tel une photodiode.

Le dispositif émetteur et/ou récepteur optoélectronique peut comporter, en plus du composant optoélectronique appelé premier composant optoélectronique, au moins un second composant optoélectronique, solidaire du dispositif de couplage hermétique et disposé sensiblement à l'opposé du trou borgne, le premier composant optoélectronique étant disposé entre le dispositif de couplage hermétique et le second composant optoélectronique.

Lorsque le premier composant optoélectronique est un émetteur laser, le second composant optoélectronique peut être un photodétecteur, tel une photodiode, et lorsque le premier composant optoélectronique est un photodétecteur, le second composant optoélectronique peut être un émetteur laser, tel un VCSEL.

Le premier composant optoélectronique peut être transparent ou quasi-transparent à au moins un faisceau lumineux émis et/ou reçu par le second composant optoélectronique, ledit faisceau lumineux devant traverser le premier composant optoélectronique et le dispositif de couplage hermétique en passant à travers la paroi de fond du trou borgne, et être véhiculé par le moyen de transmission optique.

Le second composant optoélectronique peut être solidaire du dispositif de couplage hermétique directement ou par l'intermédiaire du premier composant optoélectronique.

De préférence, la solidarisation du ou des composants optoélectroniques sur le dispositif de couplage hermétique sera réalisée avec une connexion par microbilles.

Dans ce cas, les microbilles peuvent être à base d'un matériau fusible, tel un alliage à base d'or et d'étain, d'étain et de plomb, ou un métal pur ou quasiment pur à base d'étain ou d'indium.

Le dispositif émetteur et/ou récepteur optoélectronique peut comporter un capot hermétique recouvrant le ou les composants optoélectroniques et solidaire du dispositif de couplage hermétique.

La présente invention concerne également un système émetteur et/ou récepteur optoélectronique comportant au moins un moyen de transmission optique, et un dispositif émetteur et/ou récepteur optoélectronique ainsi, caractérisé, le moyen de transmission optique ayant une partie introduite dans le trou borgne du dispositif de couplage hermétique du dispositif émetteur et/ou récepteur optoélectronique.

Le moyen de transmission optique peut être une fibre optique.

La fibre optique peut être fixée au dispositif émetteur et/ou récepteur optoélectronique par une collerette de colle.

Dans une autre variante, le moyen de transmission optique peut être une lentille, devant être passivement alignée avec une fibre optique insérée dans un connecteur, une partie, appelée première partie, de la lentille étant insérée dans le trou borgne du dispositif de couplage hermétique du dispositif émetteur et/ou récepteur optoélectronique et une seconde partie de la lentille devant être insérée dans un logement du connecteur, face à la fibre optique.

La lentille peut être de forme sensiblement sphérique.

La fibre optique peut être une fibre optique à maintien de polarisation.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1, déjà décrite, représente un exemple de VCSEL de la technique antérieure ;
- la figure 2, déjà décrite, représente un exemple de dispositif de couplage de la technique antérieure ;
- la figure 3, déjà décrite, représente une structure d'assemblage d'une fibre optique et d'un composant de la technique antérieure ;
- la figure 4, déjà décrite, représente un passage hermétique de fibre optique de la technique antérieure ;
- la figure 5 représente un schéma d'un dispositif de couplage hermétique, d'un dispositif émetteur et/ou récepteur optoélectronique et d'un système émetteur et/ou récepteur optoélectronique selon un premier mode de réalisation ;
- la figure 6 représente un schéma d'un système émetteur et/ou récepteur optoélectronique selon un second mode de réalisation ;
- la figure 7 représente un schéma d'un système émetteur et/ou récepteur optoélectronique selon un troisième mode de réalisation ;
- la figure 8 représente un schéma d'un système émetteur et/ou récepteur optoélectronique selon un quatrième mode de réalisation ;
- la figure 9A représente un schéma d'un système émetteur et/ou récepteur optoélectronique selon un cinquième mode de réalisation ;
- la figure 9B représente un schéma des éléments d'un système émetteur et/ou récepteur optoélectronique selon le cinquième mode de réalisation ;
- la figure 10 représente un schéma d'un système émetteur et/ou récepteur optoélectronique, objet de la présente invention, selon un sixième mode de réalisation ;
- la figure 11A représente un schéma d'un système émetteur et/ou récepteur optoélectronique selon un septième mode de réalisation ;
- la figure 11B représente un schéma des éléments d'un système émetteur et/ou récepteur optoélectronique selon le septième mode de réalisation ;
- la figure 12 représente un schéma d'un système émetteur et/ou récepteur optoélectronique selon un huitième mode de réalisation ;
- les figures 13a à 13d représentent les étapes de réalisation de motifs réfléchissants d'un dispositif de couplage hermétique, effectuées durant un procédé de réalisation d'un dispositif de couplage hermétique, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

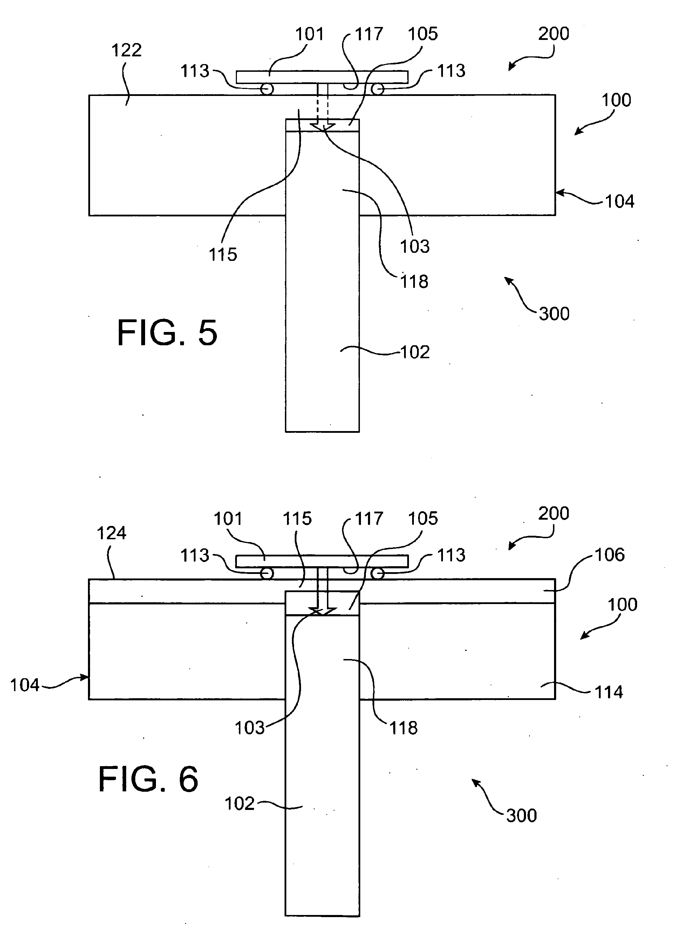

Parmi les huits modes de réalisation, seul le sixième mode de réalisation est couvert par les revendications. On se réfère tout d'abord à la figure 5 qui représente un dispositif de couplage hermétique 100 selon un premier mode de réalisation. Le dispositif de couplage hermétique 100 comporte un substrat 104 et est destiné à réaliser un couplage hermétique entre au moins un composant optoélectronique 101 devant émettre et/ou recevoir au moins un faisceau lumineux 103, par exemple un faisceau laser ou un faisceau issu d'une diode électroluminescente, et un moyen de transmission optique 102 devant véhiculer ce faisceau lumineux 103. La figure 5 représente également un dispositif émetteur et/ou récepteur optoélectronique 200 selon un premier mode de réalisation. Ce dispositif émetteur et/ou récepteur optoélectronique 200 comporte le dispositif de couplage hermétique 100 et en outre le composant optoélectronique 101. Enfin, la figure 5 représente également un système émetteur et/ou récepteur optoélectronique 300 selon un premier mode de réalisation. Le système émetteur et/ou récepteur optoélectronique 300 comporte le dispositif émetteur et/ou récepteur 200 ainsi que le moyen de transmission optique 102.

Le substrat 104 est, dans ce premier mode de réalisation, une pièce monolithique. Sur la figure 5, le substrat 104 est en un matériau, par exemple, à base de semi-conducteur, tel que du silicium. Le substrat 104 est muni d'au moins un trou borgne 105 ayant une paroi de fond 115 qui est une partie du substrat 104. Ce trou borgne 105 ne traverse donc pas totalement le substrat 104. Sur la figure 5, le trou borgne 105 est par exemple de forme sensiblement cylindrique. Il pourrait également avoir une forme différente, tel un trou à profil en V. Le trou borgne 105 peut, par exemple, être obtenu par gravure sèche telle qu'une « gravure ionique réactive profonde », appelée couramment DRIE pour « Deep Reactive Ion Etching », par gravure humide ou encore par usinage laser ou toute autre technique adaptée. Ces techniques de gravure seront décrites plus loin dans la description. Une partie 118 du moyen de transmission optique 102, ici une extrémité 118 d'une fibre optique 102, est destinée à être introduite dans le trou borgne 105.

Sur la figure 5, le composant optoélectronique 101 est, par exemple, un émetteur laser, ici un VCSEL, qui émet le faisceau lumineux 103. Le dispositif émetteur et/ou récepteur optoélectronique 200 est donc ici un dispositif émetteur optoélectronique. Le VCSEL 101 peut être solidarisé sur une face 122 du substrat 104, à l'opposé du trou borgne 105, par des microbilles 113. Ces microbilles 113 permettent d'hybrider par « flip-chip » le VCSEL 101, et donc d'aligner avec une précision inférieure au micromètre le VCSEL 101 avec la fibre optique 102. Outre leur rôle de connexion mécanique et électrique, ces microbilles 113 ont également un rôle thermique car elles permettent de dissiper la chaleur due au fonctionnement du VCSEL 101. Plusieurs dizaines de microbilles 113 sont utilisées pour réaliser cette hybridation. Ces microbilles 113 sont disposées sensiblement à la périphérie d'une face 117 du VCSEL 101. Sur la figure 5, seules deux microbilles 113 sont visibles. Ces microbilles 113 sont à base d'un matériau fusible tel, par exemple, un alliage à base d'or et d'étain. On peut également envisager d'utiliser comme matériau fusible un alliage d'étain et de plomb, ou un métal pur ou quasiment pur à base d'étain ou d'indium. Le VCSEL 101 pourrait également être solidarisé sur le dispositif de couplage hermétique 100 par une brasure classique. Le VCSEL 101 est disposé de manière à émettre le faisceau lumineux 103 dans le trou borgne 105 pour que le faisceau lumineux 103 puisse être véhiculé par la fibre optique 102. Le faisceau lumineux 103 doit donc traverser la paroi de fond 115 du trou borgne 105, avant de rentrer dans le trou borgne 105. Pour cela, le faisceau lumineux 103 doit donc être émis à une longueur d'onde permettant de traverser la paroi de fond 115 du substrat 104 et réciproquement, la paroi de fond 115 du substrat 104 doit être en un matériau pouvant être traversé par le faisceau lumineux 103, c'est-à-dire en matériau au moins partiellement transparent au faisceau lumineux 103.

Le système, ici émetteur optoélectronique 300 comporte le dispositif émetteur optoélectronique 200 et la fibre optique 102. L'extrémité 118 de la fibre optique 102 est introduite et fixée dans le trou borgne 105. Cette fixation s'effectue naturellement car le diamètre du trou borgne 105 est légèrement supérieur à celui de la fibre optique 102. Etant donné que ce système émetteur optoélectronique 300 n'apporte aucune contrainte mécanique ou thermique sur la fibre optique 102, qui est une fibre par exemple à maintien de polarisation, on n'observe aucune augmentation du couplage entre des états de polarisation du faisceau lumineux 103 véhiculé par la fibre optique 102.

Ce premier mode de réalisation du dispositif de couplage hermétique 100, du dispositif émetteur et/ou récepteur optoélectronique 200 et du système émetteur et/ou récepteur optoélectronique 300 permet bien de réaliser un couplage passif entre le composant optoélectronique 101 et le moyen de transmission optique 102, tout en garantissant l'herméticité du passage entre ces deux éléments du fait que le trou 105 est un trou borgne. Le substrat 104 réalise le guidage et la fixation du moyen de transmission optique 102 qui est passivement aligné avec le composant optoélectronique 101. Les techniques d'usinage de précision actuelles, telle que la gravure DRIE, ne permettent pas d'obtenir, dans le substrat 104 monolithique en matériau semi-conducteur, la paroi de fond 115 du trou borgne 105 permettant une transmission optimale du faisceau lumineux 103 entre le composant optoélectronique 101 et le moyen de transmission optique 102. Par exemple, avec ce premier mode de réalisation, la rugosité de la paroi de fond 115 du trou borgne 105 est d'environ plusieurs dizaines de nanomètres, ce qui induit des pertes au niveau de cette interface. De plus, les matériaux semi-conducteurs, tels que le silicium, sont partiellement transparents sur le spectre visible et proche infrarouge, et en outre des pertes existent à chaque interface silicium/air.

La figure 6 représente ici le système émetteur optoélectronique 300 selon un second mode de réalisation. Contrairement au premier mode de réalisation, le dispositif de couplage hermétique 100 de ce système émetteur optoélectronique 300 comporte un substrat 104 formé d'un empilement d'une première couche 114 et d'une seconde couche 106. Dans ce second mode de réalisation, la première couche 114 et la seconde couche 106 sont, par exemple, à base d'un matériau semi-conducteur, tel que du silicium. La première couche 114 a, par exemple, une épaisseur comprise entre environ 1 et 1,5 millimètres et est totalement traversée par le trou borgne 105 du substrat 104. La seconde couche 106 a, par exemple, une épaisseur d'environ 500 micromètres. La seconde couche 106 est ici partiellement traversée par le trou borgne 105. La seconde couche 106 forme une paroi de fond 115 du trou borgne 105. Comme sur la figure 5, le composant optoélectronique, dans cet exemple un VCSEL 101, est solidarisé sur le substrat 104, et plus précisément sur une face 124 de la seconde couche 106, à l'opposé du trou borgne 105, par les microbilles 113. La paroi de fond 115 du trou borgne 105 est maintenant une partie de la seconde couche 106.

Comme pour le premier mode de réalisation, ce second mode de réalisation du système émetteur et/ou récepteur optoélectronique 300 réalise un couplage passif entre le VCSEL 101 et la fibre optique 102 tout en garantissant l'herméticité du passage entre ces deux éléments. La première couche 114 réalise le guidage de la fibre optique 102 qui est passivement alignée avec le VCSEL 101, et l'herméticité entre la fibre optique 102 et le VCSEL 101 est garantie par la seconde couche 106 qui joue le rôle d'une fenêtre optique hermétique. Mais du fait que la seconde couche 106 est en semi-conducteur, ce second mode de réalisation présente des caractéristiques similaires à celles du premier mode de réalisation, notamment la qualité de la paroi de fond 115 du trou borgne 105 et la transparence du matériau semi-conducteur de la seconde couche 106, influant sur la qualité de la transmission du faisceau lumineux 103.

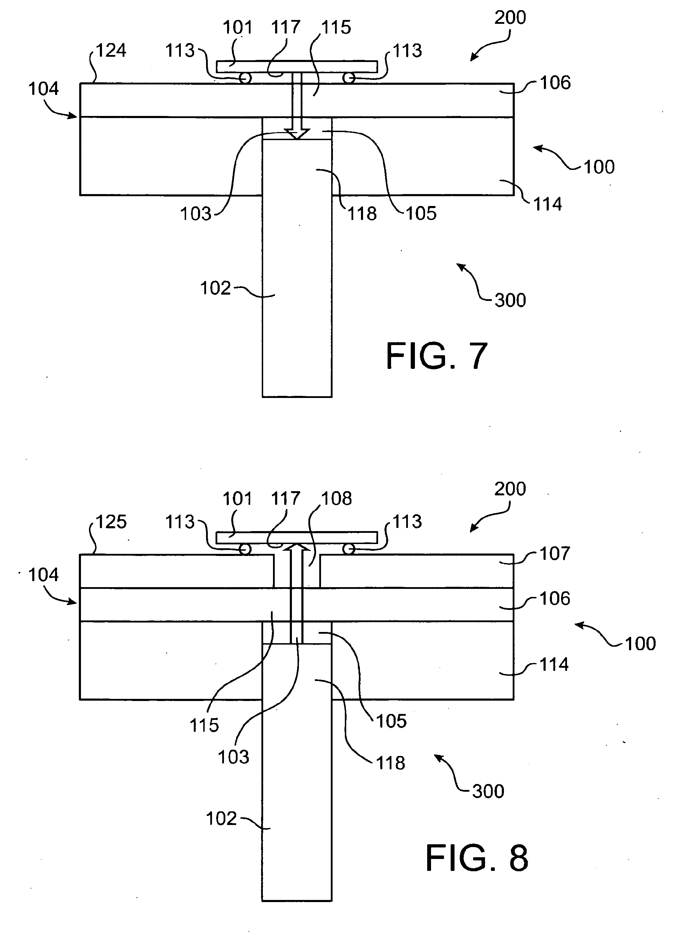

La figure 7 représente ici le système émetteur optoélectronique 300 selon un troisième mode de réalisation. Comme dans le second mode de réalisation, le substrat 104 du dispositif de couplage hermétique 100 du système émetteur optoélectronique 300 est formé d'un empilement de deux couches 114, 106, mais, contrairement au second mode de réalisation, la seconde couche 106 du substrat 104 est en un matériau transparent, par exemple, à base de verre, tel que du verre borosilicate. Cette seconde couche 106 pourrait également être en un matériau, par exemple, à base de silice. Enfin, dans ce troisième mode de réalisation, le trou borgne 105 ne se prolonge pas dans la seconde couche 106, contrairement au trou borgne 105 de la figure 6. Comme sur la figure 5, le composant optoélectronique, dans cet exemple un VCSEL 101, est solidarisé sur le substrat 104, et plus précisément sur une face 124 de la seconde couche 106, à l'opposé du trou borgne 105, par exemple par des microbilles 113.

Ce troisième mode de réalisation ne présente pas les inconvénients de transmission optique du faisceau lumineux 103 entre le VCSEL 101 et la fibre optique 102 rencontrés dans les deux précédents modes de réalisation car le fait d'avoir la seconde couche 106 à base de verre ou de silice permet d'obtenir une rugosité de la paroi de fond 115 du trou borgne 105 d'environ quelques nanomètres. De plus, les caractéristiques de transparence liés au semi-conducteur du substrat 104, rencontrés dans les deux premiers modes de réalisation sont améliorées car, dans le troisième mode de réalisation, la seconde couche 106 est à base de verre.

La figure 8 représente ici un système récepteur optoélectronique 300 selon un quatrième mode de réalisation. Le substrat 104 du dispositif de couplage hermétique 100 du système récepteur optoélectronique 300 de la figure 8 est formé d'un empilement d'une première couche 114, d'une seconde couche 106 et d'une troisième couche 107. La première couche 114 et la seconde couche 106 sont sensiblement similaires à celles de la figure 7. La troisième couche 107 est empilée et solidarisée sur la seconde couche 106. La troisième couche 107 est en un matériau par exemple à base de semi-conducteur, tel que du silicium, et a par exemple une épaisseur d'environ 50 micromètres. La troisième couche 107 comporte un trou 108 traversant, sensiblement centré par rapport au trou borgne 105 du substrat 104 et qui traverse la première couche 114. Sur la figure 8, le trou 108 a, par exemple, un diamètre légèrement inférieur à celui du trou borgne 105. La seconde couche 106 forme une paroi de fond 115 commune aux deux trous 105, 108. Contrairement aux précédents modes de réalisation, le composant optoélectronique 101 est ici un élément récepteur, par exemple une photodiode, qui est solidarisé sur une face 125 de la troisième couche 107, par exemple par des microbilles 113 à l'opposé du trou borgne 105.

Ce quatrième mode de réalisation du système émetteur et/ou récepteur optoélectronique 300 offre les mêmes qualités de couplage et d'herméticité que celles obtenues avec le troisième mode de réalisation. De plus, la troisième couche 107, à base semi-conducteur, offre, par rapport aux modes de réalisation précédents, la possibilité d'ajouter d'autres composants électroniques ou optoélectroniques qui nécessitent d'être hybridés sur une couche en semi-conducteur, et qui ne pourraient donc pas être hybridés, par exemple, sur la seconde couche 106 à base de verre ou de silice du troisième mode de réalisation.

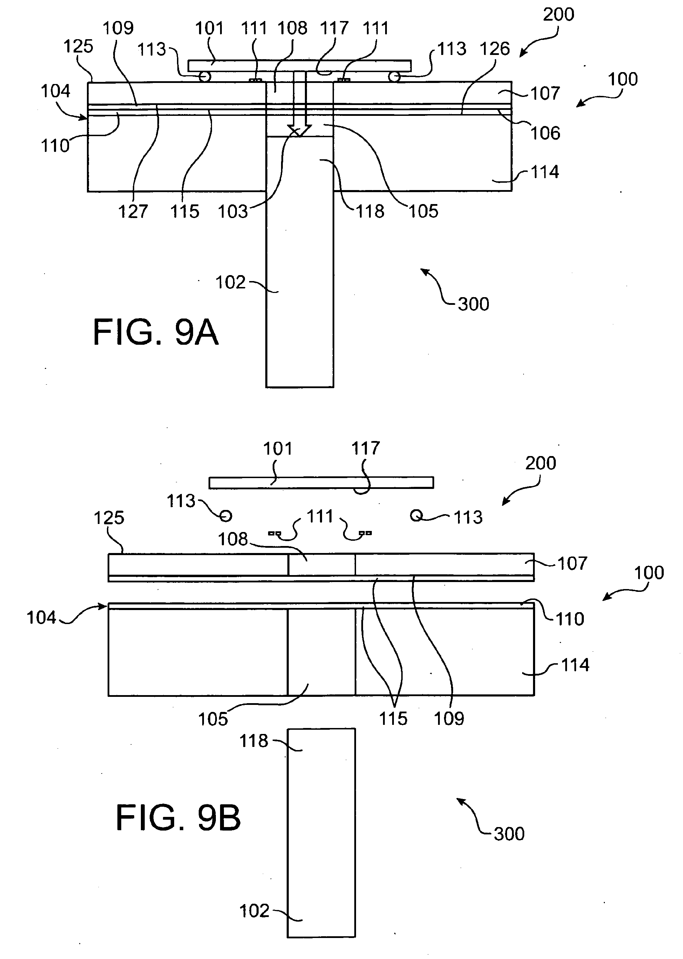

La figure 9A représente ici le système émetteur optoélectronique 300 selon un cinquième mode de réalisation. Comme dans le quatrième mode de réalisation, le substrat 104 est formé d'un empilement de trois couches.. Mais contrairement au quatrième mode de réalisation, la seconde couche 106 est ici formée d'un empilement d'au moins deux sous-couches 109, 110. Ces deux sous-couches 109, 110 sont en un matériau, par exemple, à base de silice. La seconde couche 106 est obtenue en empilant et en solidarisant la première couche 114 avec la troisième couche 107, chacune revêtue, sur une de leurs faces 126 et 127 respectivement, d'au moins une des sous-couches de silice, respectivement 110 et 109. La solidarisation de la première couche 114 et de la troisième couche 107 par l'intermédiaire des deux sous-couches 109, 110 forme donc, après assemblage par collage moléculaire, la seconde couche 106. Chacune des deux sous-couches 109, 110 peut, par exemple, avoir une épaisseur comprise entre environ 1 et 2 micromètres. La seconde couche 106 a donc une épaisseur comprise ici entre 2 et 4 micromètres. Le trou borgne 105 du substrat 104 et le trou 108 traversant sont agencés sensiblement comme sur la figure 8. Le trou 108 de la figure 9A possède, par exemple, un diamètre sensiblement similaire à celui du trou borgne 105. Le dispositif de couplage hermétique 100 de ce cinquième mode de réalisation comporte également un système de photodétection 111 intégré sur une face en semi-conducteur du substrat 104, ici en surface de la troisième couche 107. Sur la figure 9A, le système de photodétection 111 est un photodétecteur de type MSM (Métal - Semi-conducteur - Métal) obtenu par dépôt de pistes conductrices, par exemple en aluminium, sur une face 125 de la troisième couche 107. Ce photodétecteur 111 est disposé sensiblement à l'opposé du trou borgne 105 du substrat 104, sensiblement en périphérie du trou 108 traversant la troisième couche 107. Le photodétecteur 111 est disposé entre un composant optoélectronique, ici un VCSEL 101, solidarisé par exemple par des microbilles 113 sur une face 125 du substrat 104, et le substrat 104. Ainsi, lorsque le VCSEL 101 émet le faisceau lumineux 103, le photodétecteur 111 permet de contrôler la puissance du faisceau lumineux 103, sans perturber son émission.

Ce cinquième mode de réalisation du système émetteur et/ou récepteur optoélectronique 300 offre les mêmes qualités de couplage et d'herméticité que celles obtenues avec le quatrième mode de réalisation, avec en plus, la fonction réalisée par le photodétecteur 111 intégré en surface du substrat 104. Le fait que la seconde couche 106 soit formée par deux sous-couches de silice 109, 110 offre sensiblement les mêmes qualités de transmission optique du faisceau lumineux 103 qu'une seconde couche monolithique, par exemple à base de verre, comme sur la figure 8.

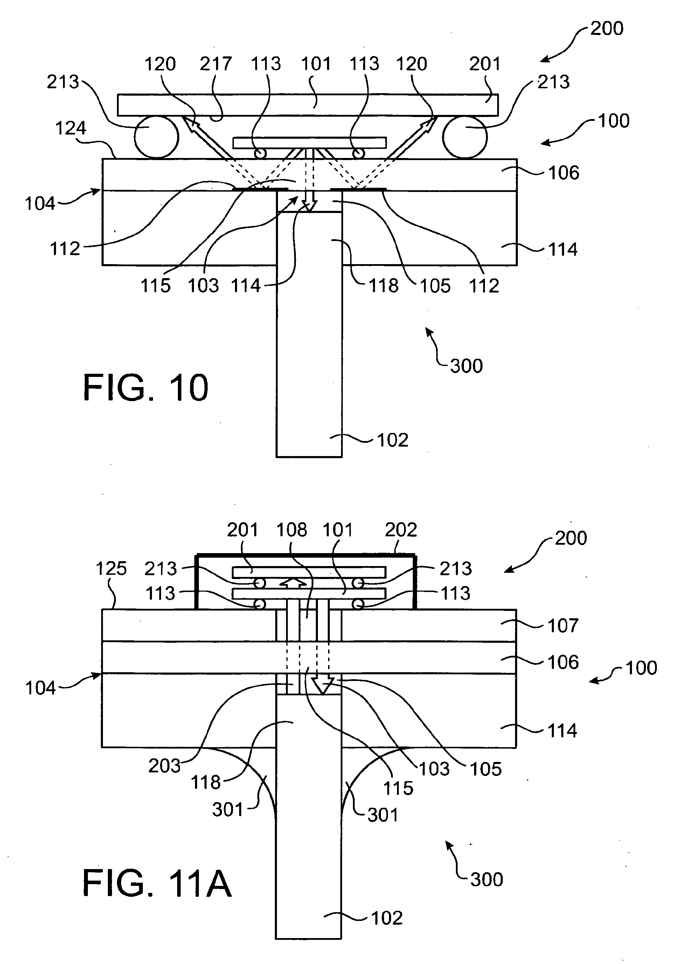

La figure 10 représente ici le système émetteur optoélectronique 300, objet de la présente invention, selon un sixième mode de réalisation. Le substrat 104 du dispositif de couplage hermétique 100 du système émetteur optoélectronique 300 est sensiblement similaire à celui du troisième mode de réalisation. Des motifs réfléchissants 112, par exemple en métal, sont insérés entre deux couches du dispositif de couplage hermétique 100, ici la première couche 114 et la seconde couche 106 du substrat 104. Ces motifs réfléchissants 112 sont disposés sensiblement en périphérie du trou borgne 105 du substrat 104, formant ainsi un miroir annulaire autour du bord du trou borgne 105. L'épaisseur de ces motifs réfléchissants 112 est, par exemple, comprise entre environ 500 nanomètres et 1 micromètre. Leur réalisation sera détaillée plus loin dans la description. Le système émetteur optoélectronique 300 comporte deux composants optoélectroniques 101, 201. Le premier composant optoélectronique 101 est par exemple un VCSEL disposé comme sur la figure 7 et solidarisé par exemple par des microbilles 113. Le second composant optoélectronique 201, par exemple une photodiode, est disposée sensiblement à l'opposé du trou borgne 105, tel que le VCSEL 101 soit disposé entre la photodiode 201 et le substrat 104 du dispositif de couplage hermétique 100. La photodiode 201 est hybridée sur la face 124 de la seconde couche 106 avec des microbilles 213 de diamètre, par exemple, supérieur à celui des microbilles 113. Plusieurs dizaines de microbilles 213 sont utilisées pour réaliser cette hybridation. Ces microbilles 213 sont disposées sensiblement à la périphérie d'une face 217 de la photodiode 201. Sur la figure 10, seules deux microbilles 213 sont visibles. Ces microbilles 213 sont à base d'un matériau fusible tel, par exemple, un alliage à base d'or et d'étain. On peut également envisager d'utiliser comme matériau fusible un alliage d'étain et de plomb, ou un métal pur ou quasiment pur à base d'étain ou d'indium. Ainsi, comme le VCSEL 101, la photodiode 201 est alignée passivement avec le moyen de transmission optique 102, avec une précision sensiblement similaire à celle obtenue pour l'alignement du VCSEL 101 avec le moyen de transmission optique 102. Le diamètre des microbilles 213 conditionne l'éloignement de la photodiode 201 par rapport au dispositif de couplage hermétique 100.

Durant le fonctionnement du système émetteur optoélectronique 300, le VCSEL 101 émet le faisceau lumineux 103. Une partie 114 du faisceau lumineux 103 traverse la seconde couche 106, puis est véhiculée par la fibre optique 102. Une autre partie 120 du faisceau lumineux 103 traverse la seconde couche 106, se reflète sur les motifs réfléchissants 112, et est renvoyée en direction de la photodiode 201. La photodiode 201 reçoit alors la partie 120 du faisceau lumineux 103, permettant de mesurer certaines caractéristiques du faisceau lumineux 103, telle que la puissance émise par le VCSEL 101.

Ce sixième mode de réalisation du système émetteur et/ou récepteur optoélectronique 300 offre les mêmes qualités de couplage et d'herméticité que celles obtenues avec le troisième mode de réalisation, avec en plus, la fonction réalisée par la photodiode 201 et les motifs réfléchissants 112. Ainsi, ce sixième mode de réalisation permet d'obtenir un dispositif unique permettant d'émettre un signal lumineux, tout en contrôlant ce signal.

La figure 11A représente ici un système émetteur et récepteur optoélectronique 300 selon un septième mode de réalisation. Le substrat 104 de la figure 11A est sensiblement similaire à celui de la figure 8. Le système émetteur et récepteur optoélectronique 300 comporte deux composants optoélectroniques 101, 201. Le premier composant optoélectronique 101 est par exemple un VCSEL disposé comme sur la figure 8. Le second composant optoélectronique 201 est, par exemple, une photodiode. La photodiode 201 est disposée sensiblement à l'opposé du trou borgne 105, au-dessus du VCSEL 101, de manière à ce que le VCSEL 101 soit disposé entre le substrat 104 et la photodiode 201. La photodiode 201 est hybridée directement sur le premier composant 101, par exemple avec des microbilles 213 sensiblement similaires aux microbilles 113 qui coopèrent avec le VCSEL 101. Ainsi, la photodiode 201 est alignée passivement avec le moyen de transmission optique 102, avec une précision sensiblement similaire à celle de l'alignement du VCSEL 101 avec le moyen de transmission optique 102. La photodiode 201 est destinée à recevoir un faisceau lumineux 203 provenant du moyen de transmission optique 102. La paroi de fond 115 et le VCSEL 101 doivent donc être transparents ou quasi-transparents au faisceau lumineux 203 reçu par la photodiode 201. Cette transparence du VCSEL 101 peut par exemple être obtenue en optimisant des miroirs de Bragg, non représentés sur cette figure, se trouvant sur des faces avant et arrière du VCSEL 101. Le dispositif émetteur et récepteur optoélectronique 200 du système émetteur et récepteur optoélectronique 300 peut comporter également un capot hermétique 202 recouvrant les composants optoélectroniques 101, 201 présents sur le substrat 104 et fixé à la troisième couche 107 du substrat 104. Ainsi, l'herméticité est non seulement réalisée par le dispositif de couplage hermétique 100 qui garantit l'herméticité entre les composants 101, 201 et le moyen de transmission optique 102, mais également par ce capot hermétique 202. Ainsi, les composants optoélectroniques 101, 201 sont totalement isolés de l'environnement extérieur. Sur la figure 11A, la fibre optique 102 est maintenue dans le trou borgne 105 et fixée au substrat 104 par une collerette de colle 301. Cette collerette de colle 301 n'a qu'un rôle de fixation de la fibre optique 102. La colle est par exemple de la colle organique.

Ce septième mode de réalisation du système émetteur et/ou récepteur optoélectronique 300 offre les mêmes qualités de couplage et d'herméticité que celles obtenues avec le quatrième mode de réalisation. Dans ce mode de réalisation, l'herméticité est totale pour les composants optoélectroniques 101, 201 présents sur le substrat 104 grâce à l'utilisation du capot 202. Enfin, la fixation de la fibre optique 102 est renforcée par l'utilisation de la collerette de colle 301.

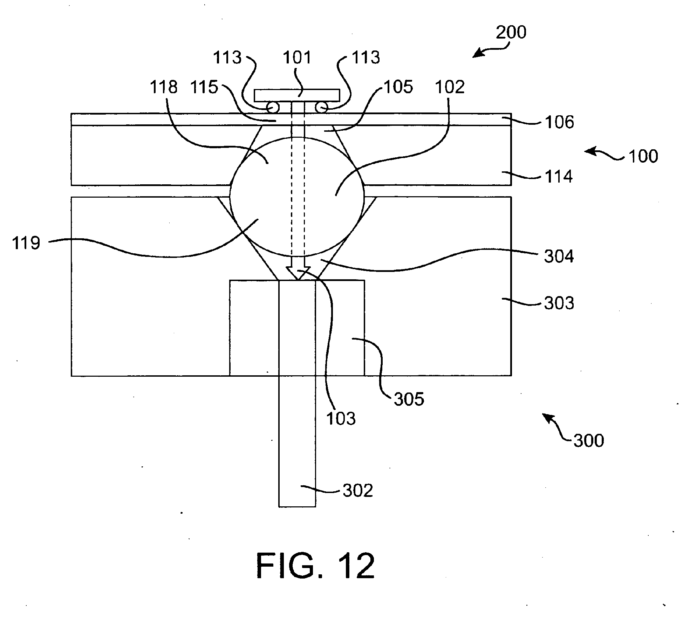

La figure 12 représente ici le système émetteur optoélectronique 300 selon un huitième mode de réalisation. Comme dans le troisième mode de réalisation, le substrat 104 est formé d'un empilement de deux couches 114, 106. Contrairement aux modes de réalisation précédents, le trou borgne 105 est un trou à profil en V, par exemple en forme d'une pyramide ou d'un cône tronqués. Comme sur la figure 5, le composant optoélectronique, dans cet exemple un VCSEL 101, est solidarisé sur le substrat 104, et plus précisément sur une face 124 de la seconde couche 106, à l'opposé du trou borgne 105, par exemple par des microbilles 113. Le moyen de transmission optique 102 est ici une lentille de forme sensiblement sphérique. Une partie 118 de la lentille 102 est introduite dans le trou borgne 105. Le profil en V du trou borgne 105 facilite cette insertion. La lentille 102 est donc alignée passivement avec le VCSEL 101 avec précision. La précision des techniques utilisées notamment pour la réalisation du trou borgne 105 avec ce profil en V, ainsi que pour l'hybridation par les microbilles 113 du VCSEL 101, permet d'obtenir un alignement passif de la lentille 102 avec le VCSEL 101 avec une précision d'environ 1 à 2 micromètres. La lentille 102 est également passivement alignée avec une fibre optique 302. Cet alignement passif est réalisé par l'intermédiaire d'un connecteur 303. Le connecteur 303, par exemple à base de polymère moulé, comporte un trou 304 de forme sensiblement similaire à celle du trou borgne 105. Une partie 119 de la lentille 102 est insérée dans le trou 304 du connecteur 303 qui se trouve en vis-à-vis avec la première couche 114 du substrat 104. Cette fibre optique 302 est reliée au connecteur 303 par l'intermédiaire d'une ferrule 305. Pendant le fonctionnement de ce système émetteur optoélectronique 300, un faisceau lumineux 103 émis par le VCSEL 101, traverse la paroi de fond 115 du trou borgne 105, passe ensuite dans le trou borgne 105, traverse la lentille 102, et arrive enfin dans la fibre optique 302. Typiquement, ce mode de réalisation permet d'obtenir un alignement passif du VCSEL 101 avec la fibre optique 102 dont la précision est inférieure à environ 5 micromètres. Ce mode de réalisation permet également de relâcher les contraintes de positionnement de la fibre 302 dans la ferrule 305. Ainsi, la fibre 302 peut par exemple être une fibre optique arasante.

Un procédé de réalisation d'un dispositif de couplage hermétique 100 entre au moins un composant optoélectronique 101 et un moyen de transmission optique 102 peut consister à réaliser, dans un substrat 104 tel que, par exemple, celui représenté sur la figure 5, une gravure pour former un trou borgne 105. Dans le cas d'un substrat 104 monolithique, comme celui de la figure 5, cette étape consistera à réaliser une gravure non débouchante dans le substrat 104. Cette gravure peut, par exemple, être une gravure sèche ou humide.

Une gravure humide anisotrope dans du silicium se fait classiquement avec, par exemple, des solutions d' hydroxyde de potassium (*KOH*) ou d'hydroxyde de tétraméthylammonium (*TMAH*)*.* La concentration et la température de la solution utilisée pour la gravure humide influent sur la vitesse de gravure et la qualité de gravure obtenue. Ces deux paramètres sont maintenus constants durant la gravure en utilisant, par exemple, un bain marie pour ne pas que la solution refroidisse, et en faisant condenser des vapeurs de la solution afin de conserver la concentration initiale de la solution. Classiquement, ces solutions, présentant des concentrations comprises entre environ 20 et 25 %, permettent d'obtenir des vitesses de gravure du silicium variant entre environ 0,5 et 1,5 micromètre par minute, pour des températures comprises entre environ 70 et 90°C. Le matériau de masquage utilisé durant la gravure humide peut, par exemple, être soit du nitrure de silicium *Si*₃*N*₄ ou de la silice *SiO*₂. Ce matériau de masquage intervient dans la vitesse de gravure. Par exemple, en utilisant comme matériau de masquage du *SiO*₂ combiné avec soit une solution à base de *KOH* ou soit une solution à base de *TMAH,* les vitesses de gravure sont plus élevées avec une solution à base de *KOH* (quelques nanomètres par seconde) qu'avec une solution à base de *TMAH* (quelques dixièmes de nanomètre par seconde). Ces solutions sont classiquement utilisées pour usiner le silicium en volume, révélant en cours de gravure des plans cristallographiques spécifiques de ce dernier.

Une méthode de gravure sèche est par exemple, une gravure profonde physico-chimique DRIE permettant de graver de façon anisotrope le silicium par voie sèche. Cette méthode allie un procédé de dépôt et une gravure plasma. Au fur et à mesure que le silicium est usiné, le procédé permet de déposer un composé fluoré sur les parois usinées afin de les passiver. Des cycles de gravure - dépôt avec des gaz et des temps bien précis doivent être respectés pour graver en profondeur et anisotropiquement le silicium indépendamment de son orientation. Les masques utilisés peuvent être en résine, en silice, ou encore en métal tel que du nickel, du chrome ou de l'aluminium.

Dans le cas d'un substrat 104 formé de plusieurs couches, comme par exemple celui de la figure 7, le trou borgne 105 est réalisé par une gravure sèche ou humide, telle que le trou borgne 105 du substrat 104 traverse complètement une première couche 114 du substrat 104. La gravure peut éventuellement être prolongée jusque dans une seconde couche 106, comme cela est représenté sur la figure 6. La seconde couche 106 forme dans les deux cas une paroi de fond 115 du trou borgne 105.

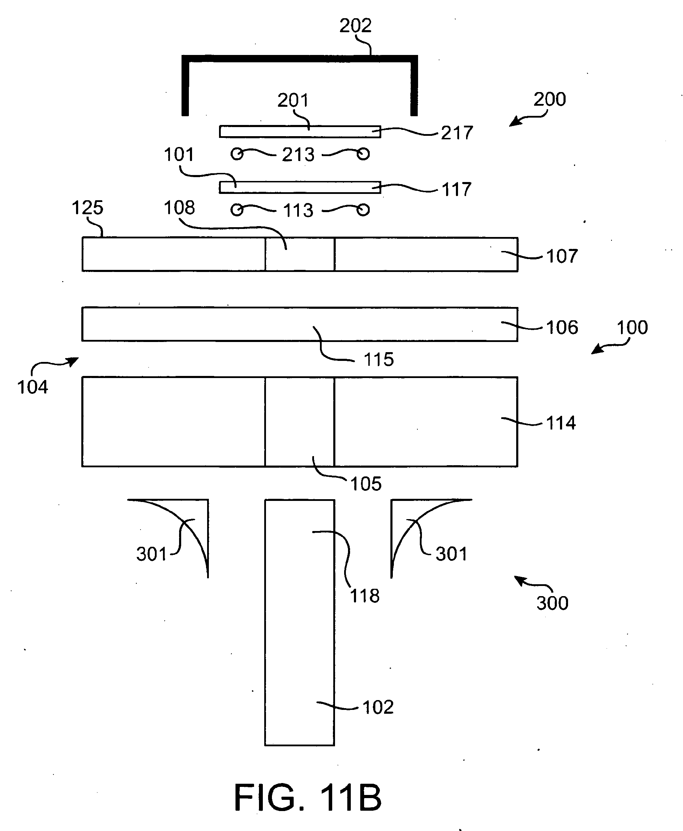

Le procédé de réalisation du dispositif de couplage hermétique 100 peut comprendre une étape supplémentaire consistant à empiler et solidariser au moins une première couche 114 avec au moins une seconde couche 106, réalisant ainsi un substrat 104 comportant au moins deux couches, tel que ceux représentés sur les figures 6 à 12. Cette étape d'empilement et de solidarisation de la première couche 114 avec la seconde couche 106, qui est représentée en passant de la figure 11B à la figure 11A, peut être réalisée avant ou après l'étape de gravure décrite ci-dessus.

La solidarisation de la première couche 114 avec la seconde couche 106 peut, par exemple, être réalisée par un procédé connu de collage direct de deux couches appelé « adhésion moléculaire » ou encore « wafer bonding » en anglais. Cette technique consiste à préparer les surfaces de deux couches destinées à être assemblées de façon à obtenir, dès le contact de ces deux surfaces, un collage quasi spontané par adhérence moléculaire, c'est-à-dire sans apport de matière. Cette préparation passe tout d'abord par une planarisation des surfaces à assembler. Cette planarisation donne, par exemple, pour une couche d'environ 5 centimètres de diamètre, des écarts inférieurs à 1 ou 2 micromètres sur la planéité de l'ensemble de la surface. La préparation consiste également à réaliser un polissage des surfaces à assembler. Ce polissage permet d'obtenir une rugosité inférieure à quelques nanomètres. Le collage quasi-spontané est en général renforcé par l'usage de traitements thermiques, par exemple à une température supérieure à 300°C. L'adhésion moléculaire est obtenue par des liaisons hydrogène qui se développent entre un atome d'hydrogène électropositif et un atome électronégatif tel que l'oxygène ou le chlore.

La solidarisation entre la première couche 114 et la seconde couche 106 peut également être obtenue par scellement anodique. Cette technique consiste à préparer les surfaces de deux couches destinées à être assemblées, et à les assembler en appliquant une pression, par exemple d'environ 10⁻³Pa, un champ électrique, par exemple d'environ 2500 V, créé par des électrodes, et un échauffement thermique compris entre environ 300°C et 500°C. La préparation des surfaces pour réaliser un scellement anodique est similaire à celle utilisée pour une adhésion moléculaire, comme cela est décrit plus haut. Pour un collage entre une première couche 114 de silicium et une seconde couche 106 de verre, le collage est dû à une formation de silice à l'interface avec les ions oxygène du verre qui se diffusent dans le silicium. Par rapport à l'adhésion moléculaire, les contraintes sur les états de surface initiaux sont moins sévères. En variante, un collage par apport de matière peut être réalisé, par exemple à l'aide d'une colle époxy.

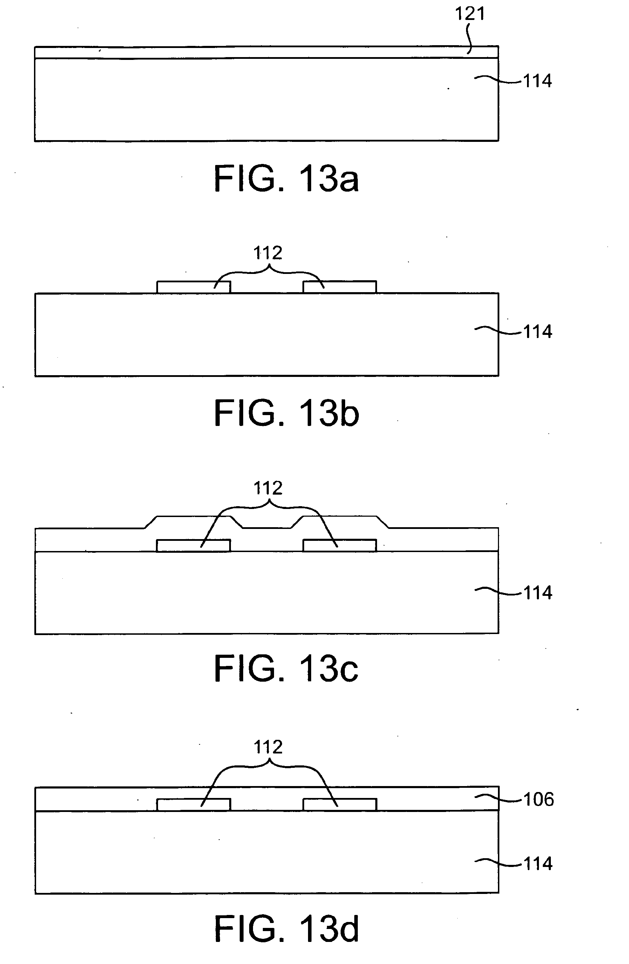

Le procédé de réalisation du dispositif de couplage hermétique 100 peut comprendre une étape supplémentaire consistant à réaliser, sur la première couche 114, des motifs réfléchissants 112 destinés à être insérés entre la première couche 114 et la seconde couche 106, avant que ces deux couches 114, 106 ne soient solidarisées. Ces motifs réfléchissants 112 peuvent être disposés sensiblement en périphérie du trou borgne 105 du substrat 104, comme cela est représenté sur le dispositif de couplage hermétique 100 de la figure 10. Les figures 13a à 13d illustrent plusieurs étapes de la réalisation de ces motifs réfléchissants 112.

L'étape de la figure 13a représente le dépôt d'une couche métallique 121, par exemple de l'aluminium, sur la première couche 114. Ce dépôt est par exemple réalisé par évaporation ou pulvérisation. A l'étape de la figure 13b, la couche métallique 121 est structurée pour former des motifs réfléchissants 112. Cette structuration peut, par exemple, être réalisée par photolithographie. A l'étape de la figure 13c, la seconde couche 106 est solidarisée sur la première couche 114, recouvrant également les motifs réfléchissants 112. A l'étape 13d, la seconde couche 106 est aplanie et polie comme, cela est décrit plus haut dans la description de la solidarisation par adhésion moléculaire.

Le procédé de réalisation du dispositif de couplage hermétique 100 peut comporter avant ou après l'étape d'empilement et de solidarisation de la première couche 114 avec la seconde couche 106, une étape d'empilement et de solidarisation d'une troisième couche 107 avec la seconde couche 106. Cette étape permet d'obtenir un substrat 104 formé de trois couches, tel que celui représenté par exemple sur la figure 8 ou 11A. Cette troisième couche 107 est totalement traversée par un trou 108. Cette troisième couche 107 est disposée de manière à ce que le trou 108 soit sensiblement centré par rapport au trou borgne 105 du substrat 104. La solidarisation de la troisième couche 107 avec la seconde couche 106 peut par exemple être réalisée par adhésion moléculaire ou par scellement anodique. La première couche 107 peut tout d'abord être une couche épaisse, typiquement d'une épaisseur d'environ 500 micromètres, que l'on amincit après la solidarisation, par exemple par polissage mécano-chimique et/ou par fracture au niveau d'un zone enterrée fragilisée créée par exemple par implantation d'espèces gazeuses. Cette étape d'empilement et de solidarisation de la troisième couche 107 avec la seconde couche 106 est représentée en passant de la figure 11B à la figure 11A.

En variante aux étapes d'empilement et de solidarisation d'une première couche 114 avec une seconde couche 106 et de la seconde couche 106 avec une troisième couche 107, le procédé de réalisation du dispositif de couplage hermétique 100 peut comporter, avant ou après l'étape de gravure du trou borgne 105 du substrat 104 dans une première couche 114, une étape d'empilement et de solidarisation d'au moins la première couche 114 avec au moins une troisième couche 107 totalement traversée par un trou 108, par l'intermédiaire d'au moins deux sous-couches 109, 110, chacune d'entre elles revêtant une face 126 et 127 à solidariser de la première couche 114 et de la troisième couche 107. L'empilement de ces sous-couches 109, 110 forme une seconde couche 106 disposée entre la première couche 114 et la troisième couche 107. Ces trois couches 114, 106, 107 forment un substrat 104 tel celui représenté sur la figure 9A. Cette étape d'empilement et de solidarisation de la première couche 114 avec la troisième couche 107 par l'intermédiaire des deux sous-couches 109, 110, représentée en passant de la figure 9B à la figure 9A, peut, par exemple, être réalisée par adhésion moléculaire ou par scellement anodique.

Le procédé de réalisation d'un dispositif de couplage hermétique 100 peut comprendre, avant ou après l'étape d'empilement et de solidarisation de la troisième couche 107 avec la première couche 114 ou la seconde couche 106, une étape supplémentaire de gravure, telle une gravure sèche ou humide, dans la troisième couche 107, pour réaliser le trou 108 traversant la troisième couche 107, tel que représenté sur les figures 8, 9 et 11.

Le procédé de réalisation d'un dispositif de couplage hermétique 100 peut également comporter une étape d'intégration d'un système de photodétection 111 en surface de la troisième couche 107. Cette intégration peut être réalisée par un dépôt de pistes conductrices, par exemple en aluminium, sur une face en semi-conducteur du substrat 104, ici une face 125 de la troisième couche 107, formant ainsi un photodétecteur 111 de type MSM. Cette étape d'intégration du système de photodétection 111 est représentée en passant de la figure 9B à la figure 9A.

Un procédé de réalisation d'un dispositif émetteur et/ou récepteur optoélectronique 200 peut consister en une étape de solidarisation d'au moins un composant optoélectronique 101 sur un substrat 104 d'un dispositif de couplage hermétique 100 réalisé selon l'un des procédés de réalisation tel que décrit ci-dessus. Les figures 5 à 12 représentent un dispositif émetteur et/ou récepteur optoélectronique 200 comportant un composant optoélectronique 101 sur un substrat 104 du dispositif de couplage hermétique 100. Le composant optoélectronique 101 est disposé sensiblement à l'opposé d'un trou borgne 105 du substrat 104. Cette étape de solidarisation du composant optoélectronique 101 est représentée en passant de la figure 9B à la figure 9A.

Cette solidarisation du composant optoélectronique 101 sur le substrat 104 du dispositif de couplage hermétique 100 peut être réalisée en deux étapes : tout d'abord une étape de réalisation de microbilles 113, représentées sur les figures 5 à 12, à base d'un matériau fusible, sur une face 117 du composant optoélectronique 101, cette face 117 étant destinée à être en vis-à-vis avec un moyen de transmission optique 102. Pour cela, on dépose des surfaces métallisées, non représentées, positionnées avec précision par photolithographie sur le composant optoélectronique 101 et sur le substrat 104. Les microbilles 113 sont ensuite déposées sur les surfaces métallisées du composant optoélectronique 101. Ensuite, une étape d'hybridation du composant optoélectronique 101 sur le substrat 104 par les microbilles 113. Pour cela, un pré-alignement est réalisé entre le composant optoélectronique 101 et le substrat 104 en alignant les surfaces métallisées du composant optoélectronique 101 avec les surfaces métallisées du substrat 104. Les microbilles 113 sont ensuite chauffées jusqu'à ce que le matériau fusible des microbilles 113 soit en fusion. Les microbilles 113 mouillent alors les surfaces métallisées du composant optoélectronique 101 et du substrat 104 et, étant donné que le métal en fusion tend à minimiser sa surface, le composant optoélectronique 101 s'aligne alors avec le substrat 104. Ces étapes réalisant la solidarisation du composant optoélectronique 101 est représentée en passant de la figure 9B à la figure 9A.

Le procédé de réalisation d'un dispositif émetteur et/ou récepteur optoélectronique 200 peut comporter, après l'étape de solidarisation du composant optoélectronique 101, appelée premier composant optoélectronique, une étape de solidarisation d'au moins un second composant optoélectronique 201 sur le substrat 104 du dispositif de couplage hermétique 100, sensiblement à l'opposé du trou borgne 105 du substrat 104. Cette solidarisation est réalisée telle que le premier composant optoélectronique 101 soit disposé entre le substrat 104 et le second composant optoélectronique 201. Les figures 10 et 11A représentent un dispositif émetteur et/ou récepteur optoélectronique 200 comportant un premier et un second composant optoélectronique 101, 201 solidarisés sur un substrat 104 d'un dispositif de couplage hermétique 100. Cette solidarisation du second composant optoélectronique 201 peut être réalisée en deux étapes, de manière analogue à la solidarisation du premier composant optoélectronique 101, avec des microbilles 213 disposée en périphérie d'une face 217 du second composant optoélectronique 201. Cette étape de solidarisation du second composant optoélectronique 201 est représentée en passant de la figure 11B à la figure 11A.

Le procédé de réalisation d'un dispositif émetteur et/ou récepteur optoélectronique 200 peut comporter, après l'étape de solidarisation du ou des composants optoélectroniques 101, 201, une étape supplémentaire consistant à fixer un capot hermétique 202 sur le substrat 104, tel que représenté sur la figure 11A. Ce capot 202 permet de protéger le ou les composants 101, 201, des agressions extérieures, complétant ainsi l'herméticité formée par le dispositif de couplage hermétique 100. Cette étape de fixation du capot hermétique 202 est représentée en passant de la figure 11B à la figure 11A.

Enfin, un procédé de réalisation d'un système émetteur et/ou récepteur optoélectronique 300 peut consister en une étape d'insertion d'une partie 118 d'un moyen de transmission optique 102 dans un trou borgne 105 d'un dispositif émetteur et/ou récepteur optoélectronique 200 réalisé selon l'un des procédés de réalisation décrit ci-dessus. Les figures 5 à 12 représentent un système émetteur et/ou récepteur optoélectronique 300 comportant une partie 118 d'un moyen de transmission optique 102 insérée dans un trou borgne 105 d'un dispositif émetteur et/ou récepteur optoélectronique 200. Cette étape d'insertion est représentée en passant de la figure 9B à la figure 9A.

Ce procédé de réalisation d'un système émetteur et/ou récepteur optoélectronique 300 peut comporter, lorsque le moyen de transmission optique 102 est une fibre optique comme cela est représenté sur la figure 11A, après l'étape d'insertion de la partie 118 de la fibre optique 102 dans le trou borgne 105, une étape de fixation de la fibre optique 102 au dispositif émetteur et/ou récepteur 200 par une collerette de colle 301. Cette étape de fixation de la fibre optique 102 est représentée en passant de la figure 11B à la figure 11A.

Enfin, ce procédé de réalisation d'un système émetteur et/ou récepteur optoélectronique 300 peut comporter, lorsque le moyen de transmission optique 102 est une lentille de forme sensiblement sphérique, après l'étape d'insertion de la partie 118, appelée première partie, de la lentille 102 dans le trou borgne 105, une étape d'insertion d'un seconde partie 119 de la lentille 102 dans un logement 304 d'un connecteur 303, face à une fibre optique 302 insérée dans le connecteur 303, comme cela est représenté sur la figure 12.

## Revendications

1. Dispositif de couplage hermétique (100) entre au moins un composant optoélectronique (101), devant émettre et/ou recevoir au moins un faisceau lumineux (103), et un moyen de transmission optique (102) devant véhiculer le faisceau lumineux (103), comportant un substrat (104) muni d'au moins un trou borgne (105), ayant une paroi de fond (115), dans lequel une partie (118) du moyen de transmission optique (102) doit être introduite, le substrat (104) étant formé d'un empilement d'au moins une première couche (114) et d'au moins une seconde couche (106) destinée à être disposée entre la première couche (114) et le composant optoélectronique (101), la première couche (114) étant totalement traversée par le trou borgne (105) du substrat (104), et la seconde couche (106) formant la paroi de fond (115) du trou borgne (105) du substrat (104), le faisceau lumineux (103) devant traverser le substrat (104) en passant à travers la paroi de fond (115) du trou borgne (105), le substrat (104) devant accueillir le composant optoélectronique (101) sensiblement à l'opposé du trou borgne (105), et comportant des motifs réfléchissants (112) insérés entre les deux couches (114, 106) du dispositif de couplage hermétique (100), disposés sensiblement en périphérie du trou borgne (105), et destinés à refléter une partie (120) du faisceau lumineux (103) émis par le composant optoélectronique (101).

2. Dispositif de couplage hermétique (100) selon la revendication 1, le substrat (104) étant en un matériau à base de semi-conducteur, tel que du silicium.

3. Dispositif de couplage hermétique (100) selon l'une des revendications précédentes, comportant un système de photodétection (111) intégré sur une surface en semi-conducteur du substrat (104), disposé sensiblement à l'opposé du trou borgne (105).

4. Dispositif de couplage hermétique (100) selon la revendication 3, le système de photodétection (111) étant au moins un photodétecteur de type MSM.

5. Dispositif de couplage hermétique (100) selon l'une des revendications précédentes, la seconde couche (106) étant partiellement traversée par le trou borgne (105).

6. Dispositif de couplage hermétique (100) selon l'une des revendications précédentes, la seconde couche (106) étant en un matériau à base de semi-conducteur, tel que du silicium.

7. Dispositif de couplage hermétique (100) selon l'une des revendications 1 à 5, la seconde couche (106) étant en un matériau à base de verre ou de silice.

8. Dispositif de couplage hermétique (100) selon l'une des revendications précédentes, la seconde couche (106) étant formée d'un empilement d'au moins deux sous-couches (109, 110).

9. Dispositif de couplage hermétique (100) selon l'une des revendications précédentes, comportant au moins une troisième couche (107) totalement traversée par au moins un trou (108) sensiblement centré par rapport au trou borgne (105), la seconde couche (106) étant disposée entre la première couche (114) et la troisième couche (107).

10. Dispositif de couplage hermétique (100) selon la revendication 9, la troisième couche (107) étant en un matériau à base de semi-conducteur, tel que du silicium.

11. Dispositif émetteur et/ou récepteur optoélectronique (200) comportant au moins un composant optoélectronique (101) émetteur et/ou récepteur et un dispositif de couplage hermétique (100), selon l'une des revendications précédentes, le composant optoélectronique (101) étant solidaire du dispositif de couplage hermétique (100) et disposé sensiblement à l'opposé du trou borgne (105) du dispositif de couplage hermétique (100).

12. Dispositif émetteur et/ou récepteur optoélectronique (200) selon la revendication 11, le composant optoélectronique (101) étant un émetteur lumineux, tel un VCSEL, ou un photodétecteur, tel une photodiode.

13. Dispositif émetteur et/ou récepteur optoélectronique (200) selon l'une des revendications 11 ou 12, comportant, en plus du composant optoélectronique (101) appelé premier composant optoélectronique, au moins un second composant optoélectronique (201), solidaire du dispositif de couplage hermétique (100) et disposé sensiblement à l'opposé du trou borgne (105), le premier composant optoélectronique (101) étant disposé entre le dispositif de couplage hermétique (100) et le second composant optoélectronique (201).

14. Dispositif émetteur et/ou récepteur optoélectronique (200) selon la revendication 13, lorsque le premier composant optoélectronique (101) est un émetteur laser, le second composant optoélectronique (201) étant un photodétecteur, tel une photodiode, et lorsque le premier composant optoélectronique (101) est un photodétecteur, le second composant optoélectronique (201) étant un émetteur laser, tel un VCSEL.

15. Dispositif émetteur et/ou récepteur optoélectronique (200) selon l'une des revendications 13 ou 14, le premier composant optoélectronique (101) étant transparent ou quasi-transparent à au moins un faisceau lumineux (203) émis et/ou reçu par le second composant optoélectronique (201), ledit faisceau lumineux (203) devant traverser le premier composant optoélectronique (101) et le dispositif de couplage hermétique (100) en passant à travers la paroi de fond (115) du trou borgne (105) et être véhiculé par le moyen de transmission optique (102).

16. Dispositif émetteur et/ou récepteur optoélectronique (200) selon l'une des revendications 13 à 15, le second composant optoélectronique (201) étant solidaire du dispositif de couplage hermétique (100) directement ou par l'intermédiaire du premier composant optoélectronique (101).

17. Dispositif émetteur et/ou récepteur optoélectronique (200) selon l'une des revendications 11 à 16, la solidarisation du ou des composants optoélectroniques (101, 201) sur le dispositif de couplage hermétique (100) étant réalisée avec une connexion par microbilles (113, 213).

18. Dispositif émetteur et/ou récepteur optoélectronique (200) selon la revendication 17, les microbilles (113, 213) étant à base d'un matériau fusible, tel un alliage à base d'or et d'étain, d'étain et de plomb, ou un métal pur ou quasiment pur à base d'étain ou d'indium.

19. Dispositif émetteur et/ou récepteur optoélectronique (200) selon l'une des revendications 11 à 18, comportant un capot hermétique (202) recouvrant le ou les composants optoélectroniques (101, 201) et solidaire du dispositif de couplage hermétique (100).

20. Système émetteur et/ou récepteur optoélectronique (300) comportant au moins un moyen de transmission optique (102) et un dispositif émetteur et/ou récepteur optoélectronique (200) selon l'une des revendications 11 à 19, le moyen de transmission optique (102) ayant une partie (118) introduite dans le trou borgne (105) du dispositif de couplage hermétique (100) du dispositif émetteur et/ou récepteur optoélectronique (200).

21. Système émetteur et/ou récepteur optoélectronique (300) selon la revendication 20, le moyen de transmission optique (102) étant une fibre optique.

22. Système émetteur et/ou récepteur optoélectronique (300) selon la revendication 21, la fibre optique (102) étant fixée au dispositif émetteur et/ou récepteur optoélectronique (200) par une collerette de colle (301).

23. Système émetteur et/ou récepteur optoélectronique (300) selon la revendication 20, le moyen de transmission optique (102) étant une lentille devant être passivement alignée avec une fibre optique (302) insérée dans un connecteur (303), une partie (118), appelée première partie, de la lentille (102) étant insérée dans le trou borgne (105) du dispositif de couplage hermétique (100) du dispositif émetteur et/ou récepteur optoélectronique (200) et une seconde partie (119) de la lentille (102) devant être insérée dans un logement (304) du connecteur (303), face à la fibre optique (302).

24. Système émetteur et/ou récepteur optoélectronique (300) selon la revendication 23, la lentille étant de forme sensiblement sphérique.

25. Système émetteur et/ou récepteur optoélectronique (300) selon l'une des revendications 21 à 24, la fibre optique (102, 302) étant une fibre optique à maintien de polarisation.

## Claims

1. Hermetic coupling device (100) between at least one optoelectronic component (101), which is to emit and/or receive at least one light beam (103), and an optical transmission means (102) which is to convey the light beam (103), comprising a substrate (104) provided with at least one blind hole (105), having a bottom wall (115), in which one part (118) of the optical transmission means (102) is to be inserted, the substrate (104) being formed of a stack of at least one first layer (114) and of at least one second layer (106) to be arranged between the first layer (114) and the optoelectronic component (101), the first layer (114) having the blind hole (105) of the substrate (104) passing fully through it, and the second layer (106) forming the bottom wall (115) of the blind hole (105) of the substrate (104), the light beam (103) having to cross the substrate (104) passing through the bottom wall (115) of the blind hole (105), the substrate (104) intended to receive the optoelectronic component (101) substantially opposite the blind hole (105), and comprising reflective patterns (112) inserted between the two layers (114, 106) of the hermetic coupling device (100), that are arranged substantially on the periphery of the blind hole (105) and intended to reflect one part (120) of the light beam (103) emitted by the optoelectronic component (101).

2. Hermetic coupling device (100) according to claim 1, the substrate (104) being in a semiconductor-based material, such as silicon.

3. Hermetic coupling device (100) according to any of the preceding claims, comprising a photodetection system (111) integrated on a semiconductor surface of the substrate (104), arranged substantially opposite the blind hole (105).

4. Hermetic coupling device (100) according to claim 3, the photodetection system (111) being at least one photodetector of MSM type.

5. Hermetic coupling device (100) according to any of the preceding claims, the second layer (106) having the blind hole (105) partly passing through it.

6. Hermetic coupling device (100) according to any of the preceding claims, the second layer (106) being in a semiconductor-based material such as silicon.

7. Hermetic coupling device (100) according to any of claims 1 to 5, the second layer (106) being in a glass- or silica-based material.

8. Hermetic coupling device (100) according to any of the preceding claims, the second layer (106) being formed of a stack of at least two sub-layers (109, 110).

9. Hermetic coupling device (100) according to any of the preceding claims, comprising at least one third layer (107) having at least one hole (108) passing fully through it that is substantially aligned with the blind hole (105), the second layer (106) being arranged between the first layer (114) and the third layer (107).

10. Hermetic coupling device (100) according to claim 9, the third layer (107) being in a semiconductor-based material, such as silicon.

11. Optoelectronic emitting and/or receiving device (200) comprising at least one optoelectronic emitting and/or receiving component (101) and a hermetic coupling device (100), according to any of the preceding claims, the optoelectronic component (101) being joined to the hermetic coupling device (100) and arranged substantially opposite the blind hole (105) of the hermetic coupling device (100).

12. Optoelectronic emitting and/or receiving device (200) according to claim 11, the optoelectronic component (101) being a light emitter such as a VCSEL, or a photodetector such as a photodiode.

13. Optoelectronic emitting and/or receiving device (200) according to either of claims 11 or 12 which, in addition to the optoelectronic component (101) called first optoelectronic component, also comprises at least one second optoelectronic component (201), joined to the hermetic coupling device (100) and arranged substantially opposite the blind hole (105), the first optoelectronic component (101) being arranged between the hermetic coupling device (100) and the second optoelectronic component (201).

14. Optoelectronic emitting and/or receiving device (200) according to claim 13, in which if the first optoelectronic component (101) is a laser emitter, the second optoelectronic component (201) is a photodetector such as a photodiode, and if the first optoelectronic component (101) is a photodetector, the second optoelectronic component (201) is a laser emitter such as a VCSEL.

15. Optoelectronic emitting and/or receiving device (200) according to either of claims 13 or 14, the first optoelectronic component (101) being transparent or near-transparent to at least one light beam (203) emitted and/or received by the second optoelectronic component (201), said light beam (203) to cross through the first optoelectronic component (101) and the hermetic coupling device (100) by passing through the bottom wall (115) of the blind hole (105) and to be conveyed by the optical transmission means (102).

16. Optoelectronic emitting and/or receiving device (200) according to any of claims 13 to 15, the second optoelectronic component (201) being joined to the hermetic coupling device (100) directly or via the first optoelectronic component (101).

17. Optoelectronic emitting and/or receiving device (200) according to any of claims 11 to 16, the joining of the optoelectronic component or components (101, 201) onto the hermetic coupling device (100) being achieved via a connection using microspheres (113, 213).

18. Optoelectronic emitting and/or receiving device (200) according to claim 17, the microspheres (113, 213) being in a fusible material such as a gold- and tin-based alloy, tin- and lead-based alloy, or a pure or nearly pure tin- or indium-based metal.

19. Optoelectronic emitting and/or receiving device (200) according to any of claims 11 to 18 comprising a hermetic cap (202) covering the optoelectronic component or components (101, 201) and joined to the hermetic coupling device (100).

20. Optoelectronic emitting and/or receiving system (300) comprising at least one optical transmission means (102) and an optoelectronic emitting and/or receiving device (200) according to any of claims 11 to 19, the optical transmission means (102) having one part (118) inserted in the blind hole (105) of the hermetic coupling device (100) of the optoelectronic emitting and/or receiving device (200).

21. Optoelectronic emitting and/or receiving system (300) according to claim 20, the optical transmission means (102) being an optical fiber.

22. Optoelectronic emitting and/or receiving system (300) according to claim 21, the optical fiber (102) being secured to the optoelectronic emitting and/or receiving device (200) by a bead of glue (301).

23. Optoelectronic emitting and/or receiving system (300) according to claim 20, the optical transmission means (102) being a lens to be passively aligned with an optical fiber (302) inserted in a connector (303), one part (118), called the first part, of the lens (102) being inserted in the blind hole (105) of the hermetic coupling device (100) of the optoelectronic emitting and/or receiving device (200), and a second part (119) of the lens (102) to be inserted in a housing (304) of the connector (303), facing the optical fiber (302).

24. Optoelectronic emitting and/or receiving system (300) according to claim 23, the lens being of substantially spherical shape.

25. Optoelectronic emitting and/or receiving system (300) according to any of claims 21 to 24, the optical fiber (102, 302) being a polarization-maintaining fiber.

## Patentansprüche

1. Hermetisch koppelnde Vorrichtung (100) zwischen wenigstens einem optoelektronischen Bauteil (101), das wenigstens einen Lichtstrahl (103) abstrahlen und/oder empfangen soll, und einer optischen Übertragungseinrichtung (102), die den Lichtstrahl (103) weiterleiten soll, ein Substrat (104) umfassend, das ein Sackloch (105) mit einer Bodenwand (115) aufweist, in dem ein Teil bzw. Teilstück (118) der optischen Übertragungseinrichtung (102) steckt, wobei das Substrat (104) durch einen Stapel gebildet wird, der wenigstens eine erste Schicht (114) und wenigstens eine zweite Schicht (106) umfasst, die sich zwischen der ersten Schicht (114) und dem optoelektronischen Bauteil (101) befindet, die erste Schicht (114) total von dem Sackloch (105) des Substrats (104) durchquert wird und die zweite Schicht (106) die Bodenwand (115) des Sacklochs (105) des Substrats (104) bildet, der Lichtstrahl (103) das Substrat (104) durchqueren muss, wobei er die Bodenwand (115) des Sacklochs (105) durchquert, das optoelektronische Bauteil (101) im Wesentlichen dem Sackloch (105) gegenübersteht und dabei durch das Substrat (104) getragen wird, das zwischen den beiden Schichfien (114, 106) der hermetisch koppelnden Vorrichtung (100) reflektierende Muster (112) umfasst, die sich im Wesentlichen an der Peripherie des Sacklochs (105) befinden und dazu bestimmt sind, einen Teil (120) des durch das optoelektronische Bauteil (101) abgestrahlten Lichtstrahls (103) zu reflektieren.

2. Hermetisch koppelnde Vorrichtung (100) nach Anspruch 1, wobei das Substrat (104) aus einem Material auf der Basis eines Halbleiters wie etwa Silicium ist.

3. Hermetisch koppelnde Vorrichtung (100) nach einem der vorangehenden Ansprüche, mit einem auf einer Halbleiteroberfläche des Substrats (104) integrierten Photodetektionssystem (111), im Wesentlichen dem Sackloch (105) gegenüberstehend.

4. Hermetisch koppelnde Vorrichtung (100) nach Anspruch 3, wobei das Photodetektionssystem (111) wenigstens ein Photodetektor des Typs MSM ist.

5. Hermetisch koppelnde Vorrichtung (100) nach einem der vorangehenden Ansprüche, wobei die zweite Schicht (106) partiell von einem Sackloch (105) durchquert wird.

6. Hermetisch koppelnde Vorrichtung (100) nach einem der vorangehenden Ansprüche, wobei die zweite Schicht (106) aus einem Material auf der Basis eines Halbleiters wie etwa Silicium ist.

7. Hermetisch koppelnde Vorrichtung (100) nach einem der vorangehenden Ansprüche, wobei die zweite Schicht (106) aus einem Material auf der Basis von Glas oder Siliciumdioxid ist.

8. Hermetisch koppelnde Vorrichtung (100) nach einem der vorangehenden Ansprüche, wobei die zweite Schicht (106) durch einen Stapel von wenigstens zwei Teilschichten (109, 110) gebildet wird.

9. Hermetisch koppelnde Vorrichtung (100) nach einem der vorangehenden Ansprüche, mit wenigstens einer dritten Schicht (107), die ganz von mindestens einem im Wesentlichen auf das Sackloch (105) zentrierten Loch (108) durchquert wird, wobei die zweite Schicht (106) sich zwischen der ersten Schicht (114) und der dritten Schicht (107) befindet.

10. Hermetisch koppelnde Vorrichtung (100) nach Anspruch 9, bei der die dritte Schicht (107) aus einem Material auf der Basis eines Halbleiters wie etwa Silicium ist.

11. Optoelektronische Sende- und/oder Empfangseinrichtung (200) mit mindestens einem optoelektronischen Sende- und/oder Empfangsbauteil (101) und einer hermetisch koppelnden Vorrichtung (100) nach einem der vorangehenden Ansprüche, wobei das optoelektronische Bauteil (101) mit der hermetisch koppelnden Vorrichtung (100) verbunden und im Wesentlichen dem Sackloch (105) gegenüber angeordnet ist.

12. Optoelektronische Sende- und/oder Empfangseinrichtung (200) nach Anspruch 11, wobei das optoelektronische Bauteil (101) ein Lichtsender ist, etwa ein VCSEL, oder ein Photodetektor, etwa eine Photodiode.

13. Optoelektronische Sende- und/oder Empfangseinrichtung (200) nach einem der Ansprüche 11 oder 12, umfassend - außer dem optoelektronischen Bauteil (101), erstes optoelektronisches Bauteil genannt - wenigstens ein zweites optoelektronisches Bauteil (201), zweites optoelektronisches Bauteil genannt, verbunden mit der hermetisch koppelnden Vorrichtung (100) und im Wesentlichen dem Sackloch (105) gegenüber angeordnet, wobei sich das erste optoelektronische Bauteil (101) zwischen der hermetisch koppelnden Vorrichtung (100) und dem zweiten optoelektronische Bauteil (201) befindet.

14. Optoelektronische Sende- und/oder Empfangseinrichtung (200) nach Anspruch 13, wobei das zweite optoelektronische Bauteil (201) ein Photodetektor wie etwa eine Photodiode ist, wenn das erste optoelektronische Bauteil (101) ein Lasersender ist, und das zweite optoelektronische Bauteil (201) ein Lasersender wie etwa ein VCSEL ist, wenn das erste optoelektronische Bauteil (101) ein Photodetektor ist.

15. Optoelektronische Sende- und/oder Empfangseinrichtung (200) nach einem der Ansprüche 13 oder 14, wobei das erste optoelektronische Bauteil (101) transparent oder quasi-transparent für wenigstens einen Lichtstrahl (203) ist, abgestrahlt und/oder empfangen durch das zweite optoelektronische Bauteil (201), und der genannte Lichtstrahl (203) das erste optoelektronische Bauteil (101) und die hermetisch koppelnde Vorrichtung (100) durchqueren muss, wobei er die Bodenwand (115) des Sacklochs (105) durchquert, um durch die optische Übertragungseinrichtung (102) weitergeleitet zu werden.

16. Optoelektronische Sende- und/oder Empfangseinrichtung (200) nach einem der Ansprüche 13 bis 15, wobei das zweite optoelektronische Bauteil (201) mit der hermetisch koppelnden Vorrichtung (100) direkt oder durch das erste optoelektronische Bauteil (101) verbunden ist.

17. Optoelektronische Sende- und/oder Empfangseinrichtung (200) nach einem der Ansprüche 11 bis 16, wobei die Verbindung des optoelektronischen Bauteil oder der optoelektronischen Bauteile (101, 201) mit der hermetisch koppelnden Vorrichtung (100) mittels Mikrokugeln (113, 213) realisiert wird.

18. Optoelektronische Sende- und/oder Empfangseinrichtung (200) nach Anspruch 17, wobei die Mikrokugeln aus einem schmelzbaren Material etwa auf der Basis einer Gold-Zinn- oder einer Zinn-Blei-Legierung oder aus einem reinen oder quasi-reinen Metall auf der Basis von Zinn oder Indium sind.

19. Optoelektronische Sende- und/oder Empfangseinrichtung (200) nach einem der Ansprüche 11 bis 18 mit einem hermetischen Deckel (202), der das optoelektronische Bauteil oder die optoelektronischen Bauteile (101, 201) abdeckt und mit der hermetisch koppelnden Vorrichtung (100) verbunden ist.

20. Optoelektronisches Sende- und/oder Empfangssystem (300) mit mindestens einer optischen Übertragungseinrichtung (102) und einer optoelektronische Sende- und/oder Empfangseinrichtung (200) nach einem der Ansprüche 11 bis 19, wobei die optischen Übertragungseinrichtungen (102) einen in dem Sackloch (105) der hermetisch koppelnden Vorrichtung (100) der optoelektronischen Sende- und/oder Empfangseinrichtung (200) steckenden Teil (118) haben.

21. Optoelektronisches Sende- und/oder Empfangssystem (300) nach Anspruch 20, wobei die optische Übertragungseinrichtungen (102) eine optische Faser ist.

22. Optoelektronisches Sende- und/oder Empfangssystem (300) nach Anspruch 21, wobei die optische Faser (102) in der optoelektronischen Sende- und/oder Empfangseinrichtung (200) durch einen Klebstoffkragen (301) befestigt ist.

23. Optoelektronisches Sende- und/oder Empfangssystem (300) nach Anspruch 20, wobei die optische Übertragungseinrichtungen (102) eine Linse ist, passiv ausgerichtet bzw. fluchtend mit einer in einen Verbinder (303) eingesetzten optische Faser (302), wobei ein erster Teil genannter Teil (118) der Linse (102) in dem Sackloch (105) der hermetisch koppelnden Vorrichtung (100) der optoelektronischen Sende- und/oder Empfangseinrichtung (200) sitzt und ein zweiter Teil (119) der Linse (102) in einen Sitz (304) des Verbinders (303) sitzt, der optischen Faser (302) gegenüberstehend.

24. Optoelektronisches Sende- und/oder Empfangssystem (300) nach Anspruch 23, wobei die Linse im Wesentlichen kugelförmig ist.

25. Optoelektronisches Sende- und/oder Empfangssystem (300) nach einem der Ansprüche 21 bis 24, wobei die optische Faser eine optische Faser mit Polarisationserhaltung ist.
